# EUROPEAN PATENT APPLICATION

(11) **EP 4 738 548 A1**
(43) Date of publication of application: **06.05.2026**
(21) Application number: 25212094.4
(22) Date of filing: 29.10.2025
(51) Int. Cl.: H01M 50/103, H01M 50/176, H01M 50/188, H01M 50/193, H01M 50/342, H01M 50/553

(54) **SECONDARY BATTERY AND METHOD FOR MANUFACTURING THE SAME**

(30) Priority: 30.10.2024 KR 20240151001
(71) Applicant: SAMSUNG SDI CO., LTD., Yongin-si, Gyeonggi-do 17084 (KR)
(72) Inventor: Kim, Soyun, Yongin-Si, Gyeonggi-do 17084 (KR)
(74) Representative: Gulde & Partner

(57) **Abstract**

A secondary battery includes an electrode assembly including a positive electrode, a separator, and a negative electrode; a case body accommodating the electrode assembly and having an open surface; a cover coupled to the open surface of the case body; and a positive electrode terminal connected to the positive electrode and coupled to a surface of the case body. The positive electrode terminal includes a fastening member extending into a through hole in the surface of the case body and a sealing member between the case body and the fastening member on the surface of the case body. The sealing member includes a vent portion.

## Description

### 1. BACKGROUND

### FIELD

Aspects of embodiments of the present disclosure relate to a secondary battery and a method of manufacturing the same.

### 2. DESCRIPTION OF THE RELATED ART

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

While charging and/or discharging of a secondary battery is being performed, gas may be generated inside the secondary battery. This internal gas may cause the deformation of an electrode assembly, etc., which may result in a short circuit inside the electrode assembly. As a result, the secondary battery may catch fire. In this manner, the safety of the secondary battery is deteriorated.

The above information disclosed in this Background section is for enhancement of understanding of the background of the present disclosure, and therefore, it may contain information that does not constitute related (or prior) art.

### SUMMARY

Embodiments of the present disclosure provide a secondary battery and a method of manufacturing the same.

These and other aspects and features of the present disclosure will be described in or will be apparent from the following description of embodiments of the present disclosure.

The invention is defined by the appended claims. The description that follows is subjected to this limitation. Any disclosure lying outside the scope of said claims is only intended for illustrative as well as comparative purposes. A secondary battery according to one embodiment of the present disclosure includes an electrode assembly including a positive electrode, a separator, and a negative electrode; a case body accommodating the electrode assembly and having an open surface; a cover coupled to the case body and covering the open surface; and a positive electrode terminal connected to the positive electrode and coupled to a surface of the case body. The positive electrode terminal includes a fastening member extending into a through hole on the surface of the case body and a sealing member between the case body and the fastening member on the surface of the case body. The sealing member includes a vent portion configured to melt at a predetermined temperature and thereby allow to vent gas inside the secondary battery to the outside.

According to one embodiment of the present disclosure the melting point of the vent portion may be in a range of 120 °C to 125 °C.

According to one embodiment of the present disclosure, the fastening member may include a head portion on the outer side of the case body and an extending portion extending from the head portion to the inside of the case body through the through hole.

According to one embodiment of the present disclosure, the sealing member may be between the case body and the head portion.

According to one embodiment of the present disclosure, the vent portion may include a first vent portion between the lower side of the head portion and the case body and a second vent portion between the outer side of the extending portion and the case body.

According to one embodiment of the present disclosure, the sealing member may further include a border portion at the edge of the first vent portion, and the melting point of the border portion may be higher than the melting point of the first vent portion.

According to one embodiment of the present disclosure, the upper surface of the border portion may be higher than the upper surface of the first vent portion, and the upper surface of the head portion may be higher than the upper surface of the border portion.

According to one embodiment of the present disclosure, a width of the first vent portion may be larger than a width of the head portion.

According to one embodiment of the present disclosure, a corner curvature of the first vent portion may be less than a corner curvature of the head portion.

According to one embodiment of the present disclosure, the case body may contain an alloy material.

According to one embodiment of the present disclosure, the sealing member may contain an insulating material.

According to one embodiment of the present disclosure, the sealing member may contain a thermoplastic resin.

According to one embodiment of the present disclosure, the positive electrode terminal may further include a terminal plate connected to the positive electrode and in the case body, and the extending portion may penetrate the terminal plate and be coupled to the terminal plate.

According to one embodiment of the present disclosure, the positive electrode terminal may further include an insulating member between the terminal plate and the case body, and the extending portion may penetrate the insulating member and be coupled to the insulating member.

According to one embodiment of the present disclosure, a width of the insulating member may be larger than a width of the terminal plate.

According to one embodiment of the present disclosure, at least a portion of the lower surface of the insulating member may include a recess corresponding to the upper surface of the terminal plate.

According to one embodiment of the present disclosure, a material of at least a portion of the insulating member may be same as a material of the vent portion.

According to one embodiment of the present disclosure, the secondary battery may further include a fixing member coupled to the lower surface of the terminal plate and the extending portion.

According to one embodiment of the present disclosure, the vent portion may include a first vent portion between the lower side of the head portion and the case body and a second vent portion between the outer side of the extending portion and the case body, and at least a portion of the second vent portion may be between the outer side of the extending portion and the terminal plate.

A method of manufacturing a secondary battery according to one embodiment of the present disclosure includes inserting an electrode assembly including a positive electrode, a separator, and a negative electrode into a case body through an open surface of the case body, connecting a positive electrode terminal to the positive electrode and coupling it to a surface of the case body, and coupling a cover to the case body to cover the open surface. The positive electrode terminal includes a fastening member inserted into a through hole on the surface of the case body and a sealing member between the case body and the fastening member on the other surface of the case body, and the sealing member includes a vent portion.

In response to the secondary battery being exposed to heat, at least a portion of the sealing member is be configured to melt and thereby vent gas inside the secondary battery to the outside. Because the sealing member serves as a vent, it is possible to improve the safety of the secondary battery without creating a separate vent device.

The secondary battery is sealed at a temperature lower than the melting point of the vent portion. However, gas generated inside the secondary battery may be discharged (vent) to the outside at a temperature equal to or higher than the melting point of the vent portion.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is an exploded perspective view of an example of a secondary battery according to one embodiment of the present disclosure;
FIG. 2 shows an example of the secondary battery according to one embodiment of the present disclosure;
FIG. 3 is an exploded view of an example of a positive electrode terminal according to one embodiment of the present disclosure;
FIG. 4 illustrates an example of a cross-section of a positive electrode terminal according to one embodiment of the present disclosure;
FIG. 5 is a cross-sectional view of a sealing member according to one embodiment of the present disclosure;
FIG. 6 is a front view of the appearance of a positive electrode terminal according to one embodiment of the present disclosure;
FIG. 7 shows how a sealing member is melted so that internal gas is discharged according to one embodiment of the present disclosure;
FIG. 8 shows how a sealing member is melted so that internal gas is discharged according to one embodiment of the present disclosure;
FIG. 9 shows how a sealing member is melted so that internal gas is discharged according to one embodiment of the present disclosure; and
FIG. 10 is a flow chart of an example of a method of manufacturing a secondary battery according to one embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, the size and relative size of layers and areas depicted in the drawings may have been exaggerated for clarity of description. That is, the sizes shown in the drawings are only for convenience of understanding and are not limited thereto. In addition, the same reference numerals refer to the same components throughout this specification.

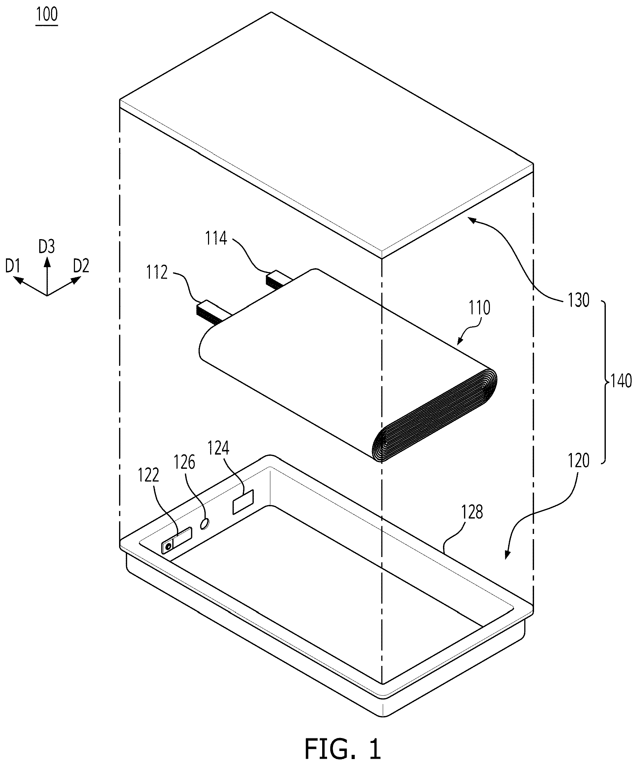

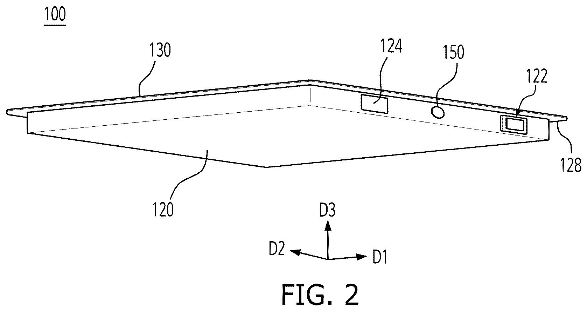

FIG. 1 is an exploded perspective view of an example of a secondary battery 100 according to one embodiment of the present disclosure, and FIG. 2 shows an example of the secondary battery 100 according to one embodiment of the present disclosure.

In one embodiment, the secondary battery 100 may include an electrode assembly 110 including a positive electrode, a separator, and a negative electrode, and a case 140 configured to accommodate the electrode assembly 110. In one or more embodiments, the case 140 may include a case body 120 that accommodates the electrode assembly 110 and has open surface (e.g., one surface in the D3 direction of the case body 120 may be open) and a cover 130 coupled to the open surface of the case body. In one or more embodiments, the electrode assembly 110 may be wound or laminated with the separator, which is an insulator, interposed between the positive and negative electrodes. The case 140 illustrated in FIG. 1 may contain an alloy material. For example, the case 140 may contain stainless steel (SUS) such that the secondary battery 100 may be a SUS-can-type secondary battery, but the present disclosure is not limited thereto. In one or more embodiments, the case 140 may be formed of a conductive metal such as aluminum, an aluminum alloy, or nickel-plated steel to form the overall appearance of the secondary battery 100.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiaA1-bXbO2-cDc (0.90≤a≤1.8, 0≤b≤0.5, 0≤c≤0.05); LiaMn2-bXbO4-cDc (0.90≤a≤1.8, 0≤b≤0.5, 0≤c≤0.05); LiaNi1-b-cCobXcO2-αDα (0.90≤a≤1.8, 0≤b≤0.5, 0≤c≤0.5, 0<α<2); LiaNi1-b-cMnbXcO2-αDα (0.90≤a≤1.8, 0≤b≤0.5, 0≤c≤0.5, 0<α<2); LiaNibCocL1dGeO2 (0.90≤a≤1.8, 0≤b≤0.9, 0≤c≤0.5, 0≤d≤0.5, 0≤e≤0.1); LiaNiGbO2 (0.90≤a≤1.8, 0.001≤b≤0.1); LiaCoGbO2 (0.90≤a≤1.8, 0.001≤b≤0.1); LiaMn1-bGbO2 (0.90≤a≤1.8, 0.001≤b≤0.1); LiaMn2GbO4 (0.90≤a≤1.8, 0.001≤b≤0.1); LiaMn1-gGgPO4 (0.90≤a≤1.8, 0≤g≤0.5); Li(3-f)Fe2(PO4)3 (0≤f≤2); and LiaFePO4 (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based heavy antibody or a (meth)acrylic polymer.

The inorganic material may include inorganic particles selected from Al2O3, SiO2, TiO2, SnO2, CeO2, MgO, NiO, CaO, GaO, ZnO, ZrO2, Y203, SrTiO3, BaTiO3, Mg(OH)2, boehmite, and combinations thereof but is not limited thereto.

The organic material and the inorganic material may be mixed in one coating layer or may be in the form of a coating layer containing an organic material and a coating layer containing an inorganic material that are laminated on each other.

In one embodiment, the electrode assembly 110 may have a positive electrode tab 112 connected to one side of the positive electrode and a negative electrode tab 114 connected to one side of the negative electrode. The positive electrode tab 112 and the negative electrode tab 114 may be connected by welding tabs to uncoated portions of the positive and negative electrodes, respectively, or may be formed by punching out the uncoated portions of the positive and negative electrodes. After the electrode assembly has been wound, the positive electrode tab 112 and the negative electrode tab 114 may be arranged in parallel (or substantially in parallel) to each other with a gap therebetween. However, the positive electrode tab 112 and the negative electrode tab 114 may also be placed on different sides (e.g., opposite sides) of the secondary battery. The electrode assembly 110 may have any suitable structure including electrode tabs.

In one embodiment, the case body 120 may include a positive electrode terminal 122 and a negative electrode terminal 124. In one or more embodiments, the positive electrode terminal 122 may be electrically connected to the positive electrode tab 112 of the electrode assembly 110, and the negative electrode terminal 124 may be electrically connected to the negative electrode tab 114 of the electrode assembly 110. In addition, the positive electrode terminal 122 and the negative electrode terminal 124 may be on another surface of the case body 120, such as the other surface in the D1 direction of the case body 120. The positions of the positive electrode terminal 122 and the negative electrode terminal 124 according to the present disclosure are not limited to the positions shown in FIG. 1 and may be located in any other suitable location(s).

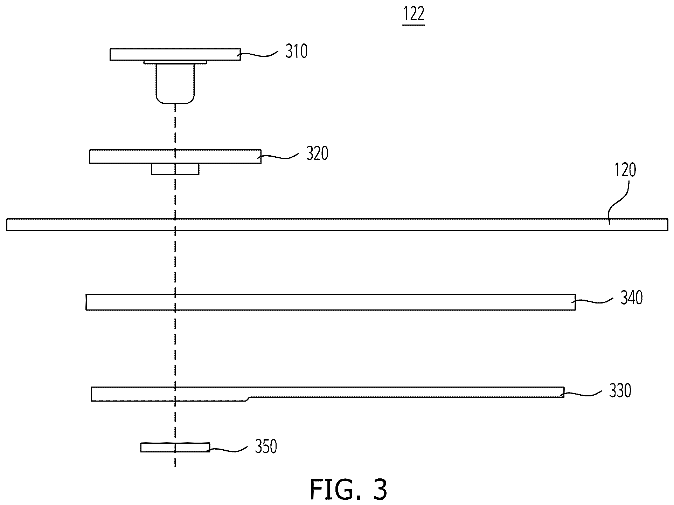

The positive electrode terminal 122 includes a fastening member inserted into a through hole on a surface of the case body 120 and a sealing member between the case body 120 and the fastening member on the surface of the case body 120. The sealing member includes a vent portion. The vent portion is configured to melt at a predetermined temperature and thereby allow to vent gas inside the secondary battery to the outside. In other words, when the temperature of the secondary battery increases, the gas pressure inside the housing may also increase. When the temperature exceeds a certain temperature, the material of the vent portion melts and is forced away by the pressurised gas. Examples of the positive electrode terminal 122 will be described in detail with reference to FIGS. 3 to 9.

In one embodiment, the case body 120 may include an electrolyte inlet 126. In one or more embodiments, the electrolyte inlet 126 may be a through hole in one surface of the case body 120, such as one surface in the D1 direction of the case body 120, and it may be configured to permit an electrolyte to be injected into the case of the secondary battery 100 after the case body 120 and the cover 130 have been joined and sealed together. After the electrolyte has been injected, a sealing plug 150 may be coupled to the electrolyte inlet 126. Although in the illustrated embodiment the electrolyte inlet 126 is placed between the positive electrode terminal 122 and the negative electrode terminal 124, the present disclosure is not limited thereto, and the electrolyte inlet 126 may be located in any other suitable location.

In one embodiment, an accommodating portion for accommodating the electrode assembly 110 (e.g., formed by pressing, etc.) is in the central area of the case body 120. In addition, a flange 128 may extend, for example, in four directions, on an upper edge of the accommodating portion (e.g., the flange 128 may extend around the periphery of the accommodating portion).

The case body 120 and the cover 130 are coupled to each other to form the exterior of the secondary battery 100. In one or more embodiments, the case body 120 and the cover 130 may be joined by a process for joining metal parts together, such as welding, brazing, and/or soldering. In one or more embodiments, the flange 128 of the case body 120 and the edge of the cover 130 may be joined together. In addition, after the case body 120 and the cover 130 have been joined, at least a portion of the flange 128 may be cut by a laser to remove a portion of the flange 128 and thereby improve the energy density of the secondary battery 100.

The secondary battery 100 may be a lithium battery cell, a sodium battery cell, etc. However, the scope of the present disclosure is not limited thereto, and examples of the secondary battery 100 may include any battery that can repeatedly provide electricity by charging and discharging. In one embodiment in which the secondary battery 100 is a lithium battery cell, it may be used for an electric vehicle (EV) because it has excellent life properties and high-rate properties. For example, it may be used for a hybrid vehicle such as a plug-in hybrid electric vehicle (PHEV). In addition, lithium battery cells can be used in fields requiring a large amount of power storage, such as electric bicycles and power tools.

FIG. 3 is an exploded view of the positive electrode terminal 122 according to one embodiment of the present disclosure. In one embodiment, the positive electrode terminal 122 may include a fastening member 310, a sealing member 320, a terminal plate 330 connected to the positive electrode or the positive electrode tab 112 in FIG. 1, an insulating member 340, and a fixing member 350 coupled to a lower surface of the terminal plate 330 and the fastening member 310. The fastening member 310 is inserted into a through hole of the case body 120. In addition, the sealing member 320 is placed between the case body 120 and the fastening member 310 on the outside of the case body 120. At least a portion of the sealing member 320 may be inserted into the through hole of the case body 120 to seal the space between the fastening member 310 and the through hole of the case body 120.

In one embodiment, the terminal plate 330 may be placed inside the case body 120 (e.g., inside the accommodating portion of the case body 120). In addition, the insulating member 340 may be between the terminal plate 330 and the case body 120. In one or more embodiments, at least a portion of the fastening member 310 may penetrate the terminal plate 330 and the insulating member 340 and may be coupled to both the terminal plate 330 and the insulating member 340.

The sealing member 320 includes a vent portion configured to melt at a predetermined temperature and thereby allow to vent gas inside the secondary battery 100 to the outside. In one or more embodiments, the sealing member 320 may include or consist of a thermoplastic resin. In addition, the melting point of the vent portion may be in a range of 120 °C to 125 °C. In one or more embodiments, the vent portion may contain or consist of a polypropylene (PP) material having a relatively low melting point. Furthermore, the sealing member 320 may contain or consist of an electrically insulating material. Accordingly, at a temperature lower than the melting point, the sealing member 320 insulates the space between the fastening member 310 and the case body 120, and, at a temperature equal to or higher than the melting point, at least a portion of the sealing member 320 melt to emit (vent) gas generated in the secondary battery 100 to the outside.

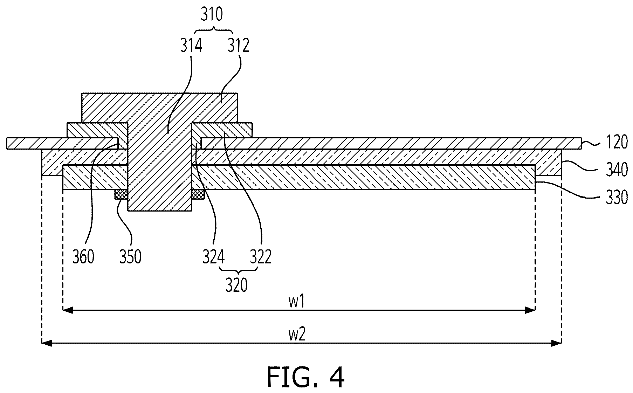

FIG. 4 illustrates an example of a cross-section of a positive electrode terminal according to one embodiment of the present disclosure. In one embodiment, the positive electrode terminal may be connected to the positive electrode and may be coupled to the case body 120. In one or more embodiments, the positive electrode terminal may include the fastening member 310 inserted into a through hole 360 in one surface of the case body 120, the sealing member 320 between the case body 120 and the fastening member 310 on the outside of the case body 120, the terminal plate 330 connected to the positive electrode and inside the accommodating portion of the case body 120, and the insulating member 340 between the terminal plate 330 and the case body 120.

In one embodiment, the fastening member 310 may include a head portion 312 on the outside of the case body 120 and an extending portion extending from the head portion 312 to the inside of the case body 120 and inserted into the through hole 360. In one or more embodiments, the sealing member 320 may be between the case body 120 and the head portion 312.

The sealing member 320 includes a vent portion configured to melt at a predetermined temperature and thereby allow to vent gas inside the secondary battery to the outside. In one or more embodiments, the melting point of the vent portion may be in a range of 120 °C to 125 °C. In one or more embodiments, the vent portion of the sealing member 320 may be configured to melt due to the deterioration of the secondary battery 100. In one or more embodiments, the vent portion may include a first vent portion 322 arranged between the lower side of the head portion 312 of the fastening member 310 and the case body 120 and a second vent portion 324 arranged between the outer side of an extending portion 314 of the fastening member 310 and the case body 120. Accordingly, in one or more embodiments, the entire sealing member 320 may be a vent portion.

In one embodiment, the sealing member 320 may contain or consists of an electrically insulating material. In addition, the sealing member 320 may contain or consist of a thermoplastic resin. Accordingly, at a temperature lower than the melting point of a material of the sealing member 320, the sealing member 320 may insulate the space between the fastening member 310 and the case body 120, and, at a temperature equal to or higher than the melting point, at least a portion of the sealing member 320 may be configured to melt to emit (vent) gas generated in the secondary battery to the outside.

In one embodiment, the extending portion 314 may penetrate the terminal plate 330 and be coupled thereto. Accordingly, the fastening member 310 may be electrically connected to the terminal plate 330. In addition, the extending portion 314 of the fastening member 310 may penetrate the insulating member 340 and be coupled thereto. In one or more embodiments, the insulating member 340 may insulate the space between the terminal plate 330 connected to the positive electrode and the case body 120. Furthermore, the material of at least a portion of the insulating member 340 may be the same as the material of the vent portion.

In one embodiment, the terminal plate 330 may be coupled to a lower surface of the insulating member 340. In one or more embodiments, at least a portion of the lower surface of the insulating member 340 may be recessed to correspond to an upper side of the terminal plate 330 (e.g., the terminal plate 330 may be seated in a recess in the insulating member 340). In addition, the width w2 of the insulating member 340 may be larger than the width w1 of the terminal plate 330. As a result, the terminal plate 330 may be coupled to the recessed area in the lower surface of the insulating member 340.

In one embodiment, the positive electrode terminal may further include the fixing member 350 coupled to the lower surface of the terminal plate 330 and the extending portion 314 of the fastening member 310. In one or more embodiments, the fixing member 350 may fix the terminal plate 330 and the insulating member 340 between the fixing member 350 and the case body 120. In one or more embodiments, the fixing member 350 may be a rivet, but the present disclosure is not limited thereto.

As a result, in response to the secondary battery being exposed to heat, at least a portion of the sealing member may melt and thereby vent gas generated inside the case to the outside. As the sealing member serves as a vent, it may be possible to improve the safety of the secondary battery without creating a separate vent device.

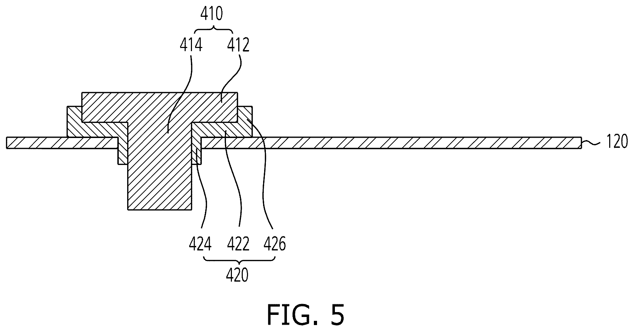

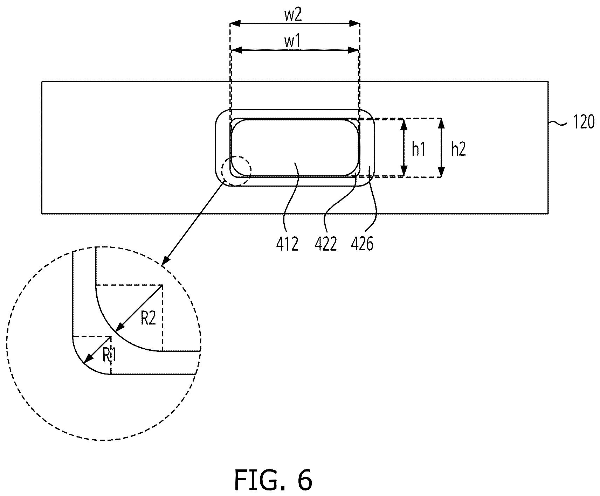

FIG. 5 is a cross-sectional view of a sealing member 420 according to one embodiment of the present disclosure, and FIG. 6 is a front view of a positive electrode terminal according to one embodiment of the present disclosure. In one embodiment, the positive electrode terminal may include a fastening member 410 inserted into a through hole of the case body 120 and the sealing member 420 disposed between the case body 120 and the fastening member 410 on the outside of the case body 120. For convenience of description, in FIGS. 5 and 6, the terminal plate, the insulating member, and the fixing member inside the case body are not illustrated.

In one embodiment, the fastening member 410 may include a head portion 412 on the outside of the case body 120 and an extending portion 414 extending from the head portion 412 to the inside of the case body 120. In one or more embodiments, at least a portion of the sealing member 420 may be between the case body 120 and the head portion 412. In one or more embodiments, at least a portion of the sealing member 420 may be between the case body 120 and the extending portion 414.

In one embodiment, the sealing member 420 may include a first vent portion 422 between a lower side of the head portion 412 and the case body 120 and a second vent portion 424 between the outer side of the extending portion 414 and the case body 120. In addition, the sealing member 420 may further include a border portion 426 at the edge of the first vent portion 422. In one or more embodiments, the border portion 426 may extend along the head portion 412 of the fastening member 410.

In one embodiment, the melting point of the first vent portion 422 and the second vent portion 424 may be in a range of 120 °C to 125 °C. In addition, the melting point of the border portion 426 may be higher than the melting point of at least one of the first vent portion 422 and the second vent portion 424. Accordingly, at a temperature lower than the melting point, the sealing member 420 may insulate the space between the fastening member 410 and the case body 120, and, at a temperature equal to or higher than the melting point, the first vent portion 422 and the second vent portion 424 may melt and thereby emit (vent) gas generated in the secondary battery.

In one embodiment, an upper surface of the sealing member 420 may be recessed corresponding to the head portion 412. In one or more embodiments, an upper surface of the border portion 426 may be higher than an upper surface of the first vent portion 422 such that the border portion 426 and the first vent portion 422 together form a recess or a seat configured to accommodate the head portion 412 of the fastening member 410. In addition, an upper surface of the head portion 412 may be higher than the upper surface of the border portion 426.

In the embodiment illustrated in FIG. 6, the width w2 of the first vent portion 422 may be larger than the width w1 of the head portion 412. In addition, the height h2 of the first vent portion 422 may be greater than the height h1 of the head portion 412. Furthermore, the corner curvature R1 of the first vent portion 422 may be less than the corner curvature R2 of the head portion 412. Accordingly, in response to the first vent portion 422 and the second vent portion 424 being melted due to deterioration, the internal gas of the secondary battery may be discharged (vented) through the gap between the head portion 412 and the border portion 426.

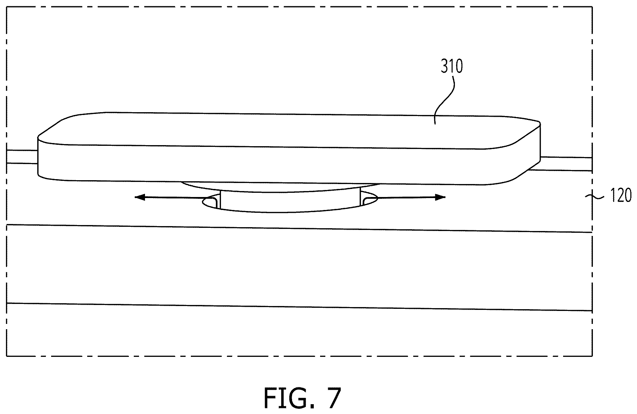

FIG. 7 shows how a sealing member is melted so that internal gas is discharged (vented) according to one embodiment of the present disclosure. In one embodiment, the sealing member between the case body 120 and the fastening member 310 may seal the space between the case body 120 and the fastening member 310. In one or more embodiments, the sealing member may include a vent portion. The melting point of the vent portion may be in a range of 120 °C to 125 °C, and the vent portion may melt due to the deterioration of the secondary battery. That is, due to the deterioration of the secondary battery, at least a portion of the sealing member may melt, opening the space between the case body 120 and the fastening member 310. Accordingly, the internal gas of the secondary battery may be discharged (vent) to the outside through this space between the case body 120 and the fastening member 310.

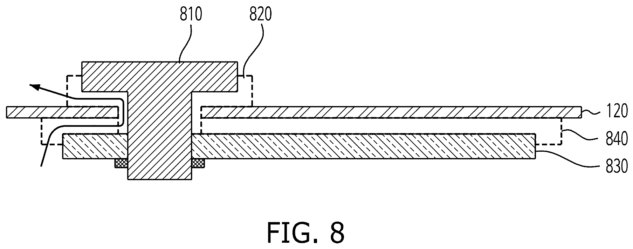

FIG. 8 shows how a sealing member 820 is melted so that internal gas is discharged (vented) according to one embodiment of the present disclosure. In one embodiment, the sealing member 820 may be between the case body 120 and a fastening member 810 on the outside of the case body 120. In addition, an insulating member 840 may be inside the case body 120 between the case body 120 and a terminal plate 830. In one or more embodiments, the sealing member 820 and the insulating member 840 may contain an insulating material.

In one embodiment, the sealing member 820 may contain a thermoplastic resin. In one or more embodiments, the sealing member 820 may include a vent portion. In one or more embodiments, the melting point of the vent portion may be in a range of 120 °C to 125 °C. In one or more embodiments, the material of at least a portion of the insulating member 840 may be the same as the material of the vent portion. In response to the deterioration of the secondary battery occurring, at least a portion of the insulating member 840 and the vent portion of the sealing member 820 may melt. Accordingly, gas in the case body 120 may be discharged (vented) to the outside of the case body 120 along a path opened due to at least a portion of the insulating member 840 and the vent portion of the sealing member 820 melting.

In FIG. 8, the insulating material 840 has been completely melted, but the present disclosure is not limited thereto. Only a portion of the insulating material 840 may melt to form a path through which internal gas can be discharged (vented) to the outside of the case body 120.

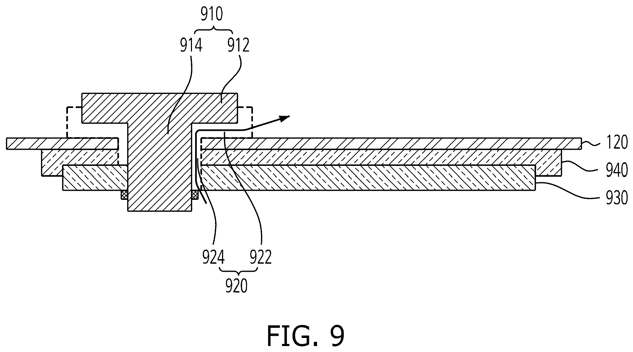

FIG. 9 shows how a sealing member 920 is melted so that internal gas is discharged (vented) according to one embodiment of the present disclosure. In one embodiment, the sealing member 920 may be between the case body 120 and a fastening member 910 on the outside of the case body 120. In one or more embodiments, the fastening member 910 may include a head portion 912 on the outside of the case body 120 and an extending portion 914 extending from the head portion 912 to the inside of the case body 120.

In one embodiment, the sealing member 920 may include a vent portion. In one or more embodiments, the vent portion may include a first vent portion 922 between a lower side of the head portion 912 and the case body 120 and a second vent portion 924 between the outer side of the extending portion 914 and the case body 120. In one or more embodiments, at least a portion of the second vent portion 924 may be between the outer side of the extending portion 914 and a terminal plate 930. That is, at least a portion of the second vent portion 924 may extend to the terminal plate 930 through the case body 120 and an insulating member 940 arranged between the terminal plate 930 and the case body 120. In this embodiment, at least a portion of the extending portion 914 may be electrically connected to the terminal plate 930.

In one embodiment, the sealing member 920 may contain a thermoplastic resin. In one or more embodiments, the melting point of the first vent portion 922 and the second vent portion 924 may be in a range of 120 °C to 125 °C. In response to the deterioration of the secondary battery occurring, the first vent portion 922 and the second vent portion 924 may melt. Accordingly, gas in the case body 120 may be discharged (vented) to the outside of the case body 120 along a path opened due to the first vent portion 922 and the second vent portion 924 melting.

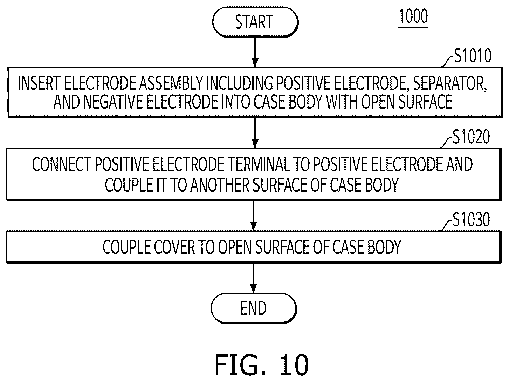

FIG. 10 is a flow chart of an example of a method 1000 of manufacturing a secondary battery according to one embodiment of the present disclosure. In one embodiment, the method 1000 of manufacturing a secondary battery may begin by inserting an electrode assembly including a positive electrode, a separator, and a negative electrode into a case body having open surface at S1010. In one or more embodiments, the case body may contain an alloy material such as SUS. Thereafter, a positive electrode terminal may be connected to the positive electrode and coupled to another surface of the case body at S1020. Then, a cover may be coupled to the open surface of the case body at S1030. The cover may contain an alloy material.

In one embodiment, the positive electrode terminal may include a fastening member inserted into a through hole on another surface of the case body and a sealing member between the case body and the fastening member on the outside of one surface of the case body. In one or more embodiments, the sealing member may include a vent portion. The melting point of the vent portion may be in a range of 120 °C to 125 °C, but the present disclosure is not limited thereto.

In one embodiment, the fastening member may include a head portion on the outside of the case body and an extending portion extending from the head portion to the inside of the case body and inserted into the through hole. In this embodiment, the sealing member may be placed between the case body and the head portion.

In one embodiment, the vent portion may include a first vent portion between a lower side of the head portion and the case body and a second vent portion between the outer side of the extending portion and the case body. In this embodiment, the sealing member may further include a border portion arranged at the edge of the first vent portion. In one or more embodiments, the melting point of the border portion may be higher than the melting point of the first vent portion. In addition, at least a portion of the second vent portion may be arranged between the outer side of the extending portion and a terminal plate.

In one embodiment, an upper surface of the border portion may be higher than an upper surface of the first vent portion, and an upper surface of the head portion may be higher than the upper surface of the border portion. In addition, the width of the first vent portion may be larger than the width of the head portion. Furthermore, the corner curvature of the first vent portion may be less than the corner curvature of the head portion.

In one embodiment, the sealing member may contain an insulating material. In one or more embodiments, the sealing member may contain a thermoplastic resin.

In one embodiment, the positive electrode terminal may further include the terminal plate connected to a positive electrode and arranged in the case body. In this embodiment, the extending portion may penetrate the terminal plate and be coupled thereto. In addition, the positive electrode terminal may further include a fixing member coupled to a lower surface of the terminal plate and the extending portion.

In one embodiment, the positive electrode terminal may further include an insulating member between the terminal plate and the case body. In this embodiment, the extending portion may penetrate the insulating member and be coupled thereto. In one or more embodiments, the material of at least a portion of the insulating member may be the same as the material of the vent portion.

In one embodiment, the width of the insulating member may be larger than the width of the terminal plate. In addition, at least a portion of a lower surface of the insulating member may include a recess corresponding to an upper side of the terminal plate.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

## Claims

1. A secondary battery (100) comprising:
an electrode assembly (110) comprising a positive electrode, a separator, and a negative electrode;
a case body (120) accommodating the electrode assembly (110) and having an open surface;
a cover (130) coupled to the case body (120), the cover (130) covering the open surface of the case body (120); and
a positive electrode terminal (122) connected to the positive electrode and coupled to a surface of the case body (120), wherein the positive electrode terminal (122) comprises:
a fastening member (310, 410) extending into a through hole (360) in the surface of the case body (120); and
a sealing member (320, 420) between the case body (120) and the fastening member (310, 410) on the surface of the case body (120), wherein the sealing member (320, 420) comprises a vent portion configured to melt at a predetermined temperature and thereby allow to vent gas inside the secondary battery (100) to the outside.

2. The secondary battery (100) as claimed in claim 1, wherein a melting point of the vent portion is in a range of 120 °C to 125 °C.

3. The secondary battery (100) as claimed in claim 1 or 2, wherein the fastening member (310, 410) comprises:
a head portion (312, 412) on an outer side of the case body (120); and
an extending portion (314, 414) extending from the head portion (312, 412) to an inside of the case body (120) through the through hole (360).

4. The secondary battery (100) as claimed in claim 3, wherein the sealing member (320, 420) is between the case body (120) and the head portion (312, 412).

5. The secondary battery (100) as claimed in claim 4, wherein the vent portion comprises:
a first vent portion (322, 422) between a lower side of the head portion (312, 412) and the case body (120); and
a second vent portion (324, 424) between an outer side of the extending portion (314, 414) and the case body (120).

6. The secondary battery (100) as claimed in claim 5, wherein the sealing member (420) further comprises a border portion (426) at an edge of the first vent portion (422), and wherein a melting point of the border portion (426) is higher than a melting point of the first vent portion (422) and second vent portion (424).

7. The secondary battery (100) as claimed in claim 6, wherein an upper surface of the border portion (426) is higher than an upper surface of the first vent portion (422), and wherein an upper surface of the head portion (412) is higher than the upper surface of the border portion (426).

8. The secondary battery (100) as claimed in claim 5, wherein a width (w2) of the first vent portion (422) is larger than a width (w1) of the head portion (412).

9. The secondary battery (100) as claimed in claim 5, wherein a corner curvature (R1) of the first vent portion (422) is less than a corner curvature (R2) of the head portion (412).

10. The secondary battery (100) as claimed in any one of the preceding claims, wherein the sealing member (320, 420) comprises or consists of a thermoplastic resin.

11. The secondary battery (100) as claimed in claim 3, wherein:
the positive electrode terminal (122) further includes a terminal plate (330) connected to the positive electrode and arranged in the case body (120), and
the extending portion (314) penetrates the terminal plate (330) and is coupled to the terminal plate (330).

12. The secondary battery (100) as claimed in claim 11, wherein:
the positive electrode terminal (122) further comprises an insulating member (340) between the terminal plate (330) and the case body (120), and
the extending portion (314) penetrates the insulating member (340) and is coupled to the insulating member (340).

13. The secondary battery (100) as claimed in claim 12, wherein a material of at least a portion of the insulating member (340) is same as a material of the vent portion.

14. The secondary battery (100) as claimed in claim 11, wherein the vent portion comprises:
a first vent portion (922) between a lower side of the head portion (912) and the case body (120); and
a second vent portion (924) between an outer side of the extending portion (914) and the case body (120), and
wherein at least a portion of the second vent portion (924) is between the outer side of the extending portion (914) and the terminal plate (930).

15. A method of manufacturing a secondary battery (100), comprising:
inserting an electrode assembly (110) comprising a positive electrode, a separator, and a negative electrode into a case body (120) through an open surface of the case body (120);
connecting a positive electrode terminal (122) to the positive electrode and coupling the positive electrode terminal (122) to a surface of the case body (120); and
coupling a cover (130) to the case body (120), the cover (130) covering the open surface of the case body (120),
wherein the positive electrode terminal (122) comprises:
a fastening member (310, 410) extending into a through hole (360) in the surface of the case body (120); and
a sealing member (320, 420) between the case body (120) and the fastening member (310, 410) on the surface of the case body (120), and
wherein the sealing member (320, 420) comprises a vent portion.
